# EUROPEAN PATENT APPLICATION

(11) **EP 4 672 845 A1**
(43) Date of publication of application: **31.12.2025**
(21) Application number: 23923447.9
(22) Date of filing: 26.02.2023
(51) Int. Cl.: H04W 74/08

(54) **TIMING ADVANCE MEASUREMENT METHOD AND APPARATUS, AND STORAGE MEDIUM**

(71) Applicant: Beijing Xiaomi Mobile Software Co., Ltd., Beijing 100085 (CN)
(72) Inventor: LUO, Xingyi, Beijing 100085 (CN)
(74) Representative: Dehns Germany Partnerschaft mbB
(86) International application number: PCT/CN2023/078308
(87) International publication number: WO 2024/174272

(57) **Abstract**

The present disclosure relates to a timing advance (TA) measurement method and apparatus, and a storage medium. The method is executed by a terminal, and comprises: determining to initiate to candidate cells a random access process, which does not comprise a random access response (RAR) execution procedure, wherein the random access process, which does not comprise the RAR execution procedure, is used for performing TA measurement on the candidate cell. In the technical solution provided by the present disclosure, by means of initiating for the terminal and to the candidate cells the random access process for performing TA measurement on the candidate cells, and by means of configuring the random access process not to comprise the RAR execution procedure, the procedure for performing the TA measurement on the basis of the random access process can be simplified, thereby reducing the time overheads of the TA measurement, preventing the TA measurement from having bigger impact on data transmission between a user and the current serving cell, and improving the user experience.

## Description

### TECHNICAL FIELD

The present disclosure relates to the communication technical field, and in particular to a Timing Advance (TA) measurement method and apparatus and a storage medium.

### BACKGROUND

In the related art, a network device may send a TA command to notify a terminal to send an uplink signal with appropriate time advance, so that signals of different terminals are aligned within a Cyclic Prefix (CP) range when arriving at a base station.

TAs may be divided into a TA in a random access procedure and a TA updated during a service. When multiple candidate cells are configured for a terminal, the time overhead for TA measurements of candidate cells through the random access procedure may be large, thus affecting data transmission(s) between a user and a current serving cell.

### SUMMARY

In order to overcome the problem existing in the related art, the present disclosure provides a timing advance measurement method and apparatus and a storage medium.

According to a first aspect of an embodiment of the present disclosure, a Timing Advance (TA) measurement method is provided. The method is performed by a terminal. The method includes:
determining to initiate, towards a candidate cell, a random access procedure not including a Random Access Response (RAR) execution process, wherein the random access procedure not including the RAR execution process is used to perform a TA measurement on the candidate cell.

According to a second aspect of an embodiment of the present disclosure, a Timing Advance (TA) measurement method is provided. The method is performed by a network device. The method includes:
determining to perform, with a terminal, a random access procedure not including a Random Access Response (RAR) execution procedure; and performing a TA measurement on a candidate cell based on the random access procedure not including the RAR execution process.

According to a third aspect of an embodiment of the present disclosure, a Timing Advance (TA) measurement apparatus is provided. The apparatus includes:
a processing unit configured to determine to initiate, towards a candidate cell, a random access procedure not including a Random Access Response (RAR) execution process, wherein the random access procedure not including the RAR execution process is used to perform a TA measurement on the candidate cell.

According to a fourth aspect of an embodiment of the present disclosure, a Timing Advance (TA) measurement apparatus is provided. The apparatus includes:
a processing unit configured to determine to perform, with a terminal, a random access procedure not including a Random Access Response (RAR) execution procedure; and perform a TA measurement on a candidate cell based on the random access procedure not including the RAR execution process.

According to a fifth aspect of an embodiment of the present disclosure, a Timing Advance (TA) measurement apparatus is provided. The apparatus includes:
a processor; and
a memory configured to store instructions executable by the processor;
the processor is configured to perform the method according to the first aspect or any one of implementations of the first aspect.

According to a sixth aspect of an embodiment of the present disclosure, a Timing Advance (TA) measurement apparatus is provided. The apparatus includes:
a processor; and
a memory configured to store instructions executable by the processor;
the processor is configured to perform the method according to the second aspect or any one of implementations of the second aspect.

According to a seventh aspect of an embodiment of the present disclosure, a storage medium is provided, in which instructions are stored. When the instructions in the storage medium are executed by a processor of a terminal, the terminal is caused to perform the method according to the first aspect or any one of the implementations of the first aspect.

According to an eighth aspect of an embodiment of the present disclosure, a storage medium is provided, in which instructions are stored. When the instructions in the storage medium are executed by a processor of a network device, the network device is caused to perform the method according to the second aspect or any one of the implementations of the second aspect.

The technical solutions provided by the embodiments of the present disclosure may include the following beneficial effects. The terminal initiates, towards the candidate cell, the random access procedure for performing the TA measurement on the candidate cell, and the random access procedure is set as not including the RAR execution process. The process of TA measurement based on RA can be simplified, the time overhead for TA measurement can be reduced, and the technical solutions can avoid the situation where the TA measurement brings a relatively large impact on the data transmission(s) between a user and a current serving cell, thereby improving user experience.

It is to be understood that the foregoing general description and the following detailed description are illustrative and explanatory only and are not restrictive of the present disclosure.

### BRIEF DESCRIPTION OF THE DRAWINGS

The accompanying drawings, which are incorporated in and constitute a part of the specification, illustrate embodiments consistent with the present disclosure and, together with the specification, serve to explain the principles of the present disclosure.
FIG. 1 is a schematic diagram of a wireless communication system according to an example embodiment.
FIG. 2 is a schematic diagram showing a network device maintaining multiple candidate cells for a user according to an example embodiment.
FIG. 3 is a flowchart of a TA measurement method according to an example embodiment.
FIG. 4 is a flowchart of a method of determining to initiate, towards a candidate cell, a random access procedure not including an RAR execution process according to an example embodiment.
FIG. 5 is a flowchart of a method of determining to initiate, towards a candidate cell, a random access procedure not including an RAR execution process according to an example embodiment.
FIG. 6 is a flowchart of a method of determining to initiate, towards a candidate cell, a random access procedure not including an RAR execution process according to an example embodiment.
FIG. 7 is a flowchart of a method of determining to initiate, towards a candidate cell, a random access procedure not including an RAR execution process according to an example embodiment.
FIG. 8 is a flowchart of a method of determining to initiate, towards a candidate cell, a random access procedure not including an RAR execution process according to an example embodiment.
FIG. 9 is a schematic diagram of random access resources configured by a network device for a terminal according to an example embodiment.
FIG. 10 is a flowchart of a method of determining to initiate, towards a candidate cell, a random access procedure not including an RAR execution process according to an example embodiment.
FIG. 11 is a flowchart of a TA measurement method according to an example embodiment.
FIG. 12 is a flowchart of a TA measurement method according to an example embodiment.
FIG. 13 is a flowchart of a method of determining to perform, with a terminal, a random access procedure not including an RAR execution process according to an example embodiment.
FIG. 14 is a flowchart of a method of determining to perform, with a terminal, a random access procedure not including an RAR execution process according to an example embodiment.
FIG. 15A is a schematic diagram of a procedure of implementing a TA measurement through interaction(s) between a terminal and a network device according to an example embodiment of the present disclosure.
FIG. 15B is a schematic diagram of a procedure of implementing a TA measurement through interaction(s) between a terminal and a network device according to an example embodiment of the present disclosure.
FIG. 16 is a schematic diagram of a procedure of implementing a TA measurement through interaction(s) between a terminal and a network device according to an example embodiment of the present disclosure.
FIG. 17 is a block diagram of a Timing Advance (TA) measurement apparatus according to an example embodiment.
FIG. 18 is a block diagram of a Timing Advance (TA) measurement apparatus according to an example embodiment.
FIG. 19 is a block diagram of an apparatus for measuring Timing Advance (TA) according to an example embodiment.
FIG. 20 is a block diagram of an apparatus for measuring Timing Advance (TA) according to an example embodiment.

### DETAILED DESCRIPTION

Here, example embodiments will be described in detail, examples of which are shown in the accompanying drawings. When the following description refers to the drawings, the same numbers in different drawings represent the same or similar elements unless otherwise indicated. The implementations described in the following example embodiments do not represent all implementations consistent with the present disclosure.

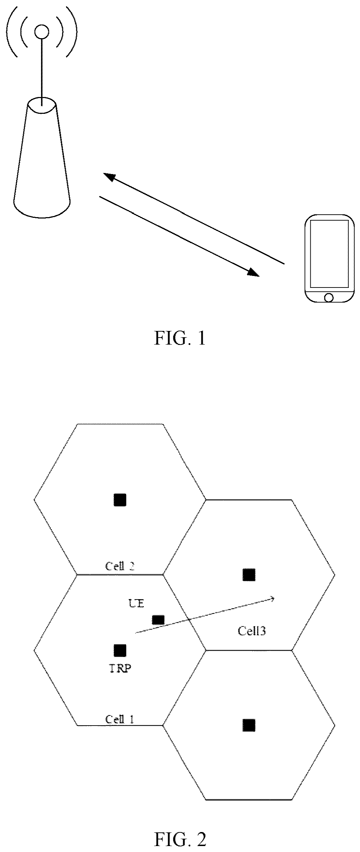

The communication methods of the present disclosure may be applied to the wireless communication system shown in FIG. 1. Referring to FIG. 1, the wireless communication system includes a network device and a terminal. The terminal is connected to the network device through wireless resource(s) and performs a data transmission.

It is understandable that the wireless communication system shown in FIG. 1 is only for schematic illustration, and the wireless communication system may also include other network devices, such as a core network device, a wireless relay device, and a wireless backhaul device, etc., which are not shown in FIG. 1. The embodiments of the present disclosure do not limit the number of network device(s) and terminal(s) included in the wireless communication system.

It can be further understood that the wireless communication system of the embodiment of the present disclosure is a network that provides wireless communication function(s). The wireless communication system may adopt different communication technologies, such as Code Division Multiple Access (CDMA), Wideband Code Division Multiple Access (WCDMA), Time Division Multiple Access (TDMA), Frequency Division Multiple Access (FDMA), Orthogonal Frequency-Division Multiple Access (OFDMA), Single Carrier Frequency Division Multiple Access (Single Carrier FDMA, SC-FDMA), carrier sense multiple access/collision avoidance (Carrier Sense Multiple Access with Collision Avoidance). According to other factors of different networks, such as the capacity, rate, latency, etc., networks may be divided into a 2^{nd} generation (2G) network, a 3G network, a 4G network or a future evolved network, such as a 5G network. The 5G network may also be called a New Radio (NR) network. For the convenience of description, the present disclosure sometimes refers to the wireless communication network as a network.

Further, the network device involved in the present disclosure may also be referred to as a wireless access network device. The wireless access network device may be: a base station, an evolved base station (evolved node B, base station), a home base station, an Access Point (AP) in a Wireless Fidelity (WiFi) system, a wireless relay node, a wireless backhaul node, a Transmission Point (TP) or a Transmission and Reception Point (TRP), etc. The wireless access network device may also be a gNB in an NR system, or it may also be a component or a part of a device constituting a base station. It should be understood that in the embodiments of the present disclosure, the specific technology and specific device form adopted by the network device are not limited. In the present disclosure, the network device may provide communication coverage for a specific geographical area and may communicate with terminal(s) in the coverage area (cell). In addition, when it is a vehicle-to-everything (V2X) communication system, the network device may also be a vehicle-mounted device.

Furthermore, the terminal involved in the present disclosure may also be referred to as a terminal device, User Equipment (UE), a Mobile Station (MS), a Mobile Terminal (MT), etc., and the terminal is a device that provides voice and/or data connectivity to a user. For example, the terminal may be a handheld device with a wireless connection function, a vehicle-mounted device, etc. At present, some examples of the terminal are: a smart phone (Mobile Phone), Customer Premise Equipment (CPE), a pocket computer (Pocket Personal Computer, PPC), a handheld computer, a Personal Digital Assistant (PDA), a laptop computer, a tablet computer, a wearable device, or a vehicle-mounted device, etc. In addition, when it is a vehicle-to-everything (V2X) communication system, the terminal device may also be a vehicle-mounted device. It should be understood that the embodiments of the present disclosure do not limit the specific technology and specific device form adopted by the terminal.

In related art, inter-cell mobility (L1/L2 based Inter-Cell Mobility, LTM) based on layer 1 or layer 2 (Layer1/Layer2, L1/L2) is proposed. As shown in FIG. 2, a network device may maintain multiple candidate cells for a user. A UE is a terminal, which may also be called user equipment, and no distinction is made between the two here. A TRP is a network device, Cell1 is a serving cell, Cell2 and Cell3 are different candidate cells. As the user equipment moves, when switching is required, a cell may be selected from multiple candidate cells as a target cell, and the user equipment switches to the target cell. Different from the traditional cell switching method, in order to reduce the switching delay and complete the switching as soon as possible, whether to perform cell switching is based on the L1 measurement results, and the switching signaling may also be designed as dynamic signaling. And, it is also needed to consider measuring the TA value of the user equipment to each candidate cell in advance.

The TA value may be obtained in advance by the network device through measurement. The network device obtains the TA value by measuring the uplink signal received from the terminal. In some implementations, the TA measurement for a candidate cell may be performed based on a random access procedure. The TA measurement for the candidate cell performed based on the random access procedure may be based on a Physical Downlink Control Channel (PDCCH) order triggering a Random Access Channel (RACH). In other implementations, the TA measurement for the candidate cell performed based on the random access procedure may also be based on the terminal triggering RACH. However, the time overhead of the random access procedure is usually large. When there are many candidate cells, the time overhead for measuring multiple candidate cells may be too large and a relatively great influence may be imposed on a data transmission between the terminal and the current serving cell.

In view of the above, in the embodiments of the present disclosure, in order to reduce the time overhead of a TA measurement for a candidate cell and avoid a relatively large influence of the TA measurement for the candidate cell on the data transmission between a user and a current serving cell, the TA measurement procedure for the candidate cell based on the random access procedure may be enhanced.

An embodiment of the present disclosure provides a TA measurement method. A terminal initiates, towards a candidate cell, a random access procedure for performing a TA measurement on the candidate cell, and the random access procedure is set as not including execution of a Random Access Response (RAR) process, so as to enhance the TA measurement procedure for the candidate cell based on the random access procedure.

It can be understood that the random access procedure not including the RAR execution process involved in the embodiment of the present disclosure may be understood as: a terminal sends a random access preamble sequence on a Random Access Channel (RACH) towards a candidate cell, but a network device does not send an RAR message and the terminal does not receive the RAR message. It can also be understood as a newly introduced random access procedure. The newly introduced random access procedure involved in the embodiment of the present disclosure is used to perform a TA measurement on the candidate cell.

It should be noted that the random access procedure involved in the embodiments of the present disclosure below refers to a random access procedure that does not include the RAR execution process and is used to perform a TA measurement for a candidate cell.

In the embodiment of the present disclosure, by setting the random access procedure that does not include the RAR execution process to perform the TA measurement for the candidate cell, the process of performing the TA measurement based on the random access procedure can be simplified, the time overhead of the TA measurement can be reduced, and a situation where the TA measurement brings a relatively large influence on the data transmission between a user and a current serving cell can be avoided, thereby improving user experience.

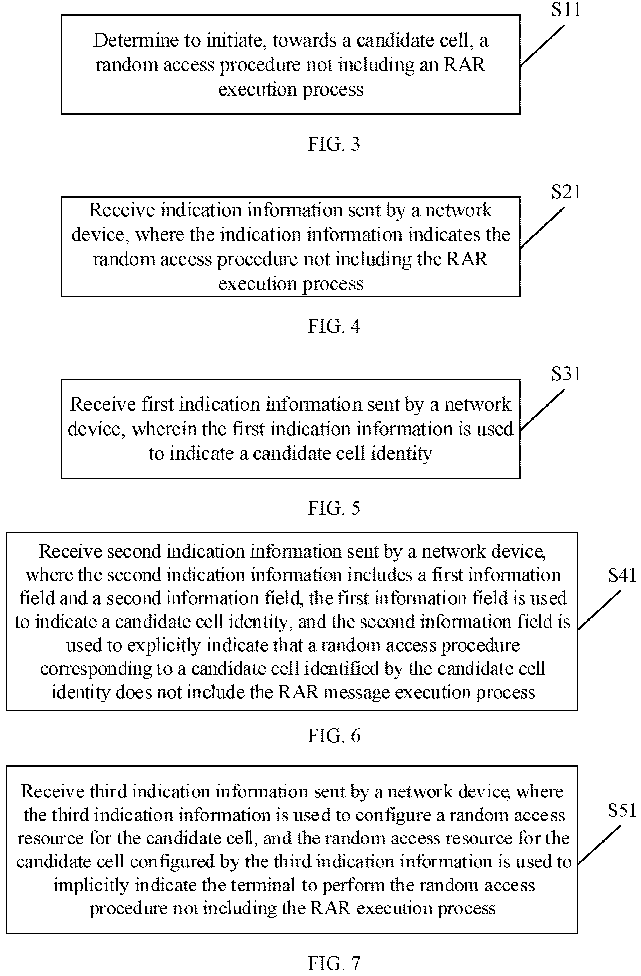

FIG. 3 is a flowchart of a TA measurement method according to an example embodiment. As shown in FIG. 3, the method is performed by a terminal and includes the following step.

In step S11, it is determined to initiate, towards a candidate cell, a random access procedure not including an RAR execution process.

The random access procedure involved in the embodiment of the present disclosure does not include the RAR execution process and is used to perform a TA measurement on the candidate cell.

By adopting the technical solution of the embodiment of the present disclosure, the random access procedure is initiated by the terminal towards the candidate cell for performing the TA measurement on the candidate cell, and the random access procedure is set as not including the RAR execution process. The technical solution can simplify the process of the TA measurement based on RA, reduce the time overhead of the TA measurement, avoid a situation where the TA measurement imposes a relatively large influence on a data transmission between a user and a current serving cell, and improve the user experience.

In an embodiment of the present disclosure, the terminal determines, based on a network device, whether the random access procedure initiated towards the candidate cell includes the RAR execution process.

In an example embodiment, the terminal in the embodiment of the present disclosure may determine whether the random access procedure initiated towards the candidate cell includes the RAR execution process based on indication information sent by the network device. The indication information is used to indicate whether the random access procedure includes the RAR execution process.

FIG. 4 is a flowchart of a method of determining to initiate, towards a candidate cell, a random access procedure not including an RAR execution process according to an example embodiment. As shown in FIG. 4, the method includes the following step.

In step S21, indication information sent by a network device is received. The indication information indicates a random access procedure not including an RAR execution process.

In the embodiment of the present disclosure, the indication information sent by the network device indicates the random access procedure not including the RAR execution process, and the terminal determines that the random access procedure initiated towards the candidate cell does not include the RAR execution process.

In an embodiment of the present disclosure, the indication information sent by the network device may be information for triggering a TA measurement for a candidate cell, for example, the information may be Downlink Control Information (DCI) in a random access procedure triggered based on a PDCCH order.

In the TA measurement method provided by the embodiment of the present disclosure, when the terminal determines to initiate, towards the candidate cell, the random access procedure not including the RAR execution process based on the indication information sent by the network device, it may be determined by default that the random access procedure for the candidate cell triggered by the PDCCH order does not include the RAR execution process. That is, in a case that the cell corresponding to the random access procedure indicated by the indication information is a candidate cell, it is determined to initiate the random access procedure not including the RAR execution process towards the candidate cell.

In an embodiment of the present disclosure, the indication information sent by the network device may be used to indicate a candidate cell identity. That is, the candidate cell identity is used to implicitly indicate the terminal to initiate, towards the candidate cell, the random access procedure not including the RAR execution process.

In an embodiment of the present disclosure, for the convenience of description, the indication information used to implicitly indicate the terminal to initiate, towards the candidate cell, the random access procedure not including the RAR execution process is referred to as first indication information. The first indication information is used to indicate a candidate cell identity, and the candidate cell identity is used to implicitly indicate that a random access procedure corresponding to a candidate cell identified by the candidate cell identity does not include the RAR execution process.

FIG. 5 is a flowchart of a method of determining to initiate, towards a candidate cell, a random access procedure not including an RAR execution process according to an example embodiment. As shown in FIG. 5, the method includes the following step.

In step S31, first indication information sent by a network device is received. The first indication information is used to indicate a candidate cell identity.

In an embodiment of the present disclosure, the first indication information sent by the network device to the terminal includes a cell identity (ID). In a case that the cell ID is a candidate cell identity, it is used to implicitly indicate that the random access procedure corresponding to the candidate cell identified by the candidate cell identity does not include the RAR execution process. That is, in a case that the terminal determines that the network device indicates a random access procedure for performing a TA measurement for a candidate cell, it is determined by default that the random access procedure does not include the RAR execution process.

The first indication information may be carried in DCI. Table 1 shows an example of the DCI. As shown in Table 1, the DCI includes a frequency domain resource assignment information field, a random access preamble index information field, a synchronization signal/physical broadcast channel signal block index information field, and a physical random access channel mask index information field. The DCI further includes a cell ID field, which is used to indicate a candidate cell identity.

**Table 1**

| DCI information field | frequency domain resource assignment | random access preamble index | uplink/supplemental uplink indication | synchroni -zation signal block index | physical random access channel mask index | reserved bit | Cell ID |
|---|---|---|---|---|---|---|---|
| | All ones | 6 bits | 1 bit | 6 bits | 4 bits | X | candidate cell identity |

In a TA measurement method provided by an embodiment of the present disclosure, a network device implicit indication mode is used to indicate a terminal to initiate a random access procedure not including an RAR execution process towards a candidate cell. It can also be understood that indication information sent by the network device is used to explicitly indicate the terminal to initiate the random access procedure not including the RAR execution process towards the candidate cell.

In an embodiment of the present disclosure, for the convenience of description, the indication information sent by the network device to explicitly indicate the terminal to initiate, towards the candidate cell, the random access procedure not including the RAR execution process is called second indication information. The second indication information may be, for example, DCI in a random access procedure triggered based on a PDCCH order.

In an embodiment of the present disclosure, the second indication information may include a first information field used to indicate a cell identity and a second information field used to indicate whether a random access procedure includes an RAR execution process. The second information field may also be understood as a newly introduced RAR indication field. The second information field may indicate whether the RAR execution process is included based on a specific bit value. For example, a bit is introduced. A bit value of 1 indicates that the random access procedure does not include the RAR execution process; a bit value of 0 indicates that the random access procedure includes the RAR execution process, or vice versa.

FIG. 6 is a flowchart of a method of determining to initiate, towards a candidate cell, a random access procedure not including an RAR execution process according to an example embodiment. As shown in FIG. 6, the method includes the following step.

In step S41, second indication information sent by a network device is received. The second indication information includes a first information field and a second information field. The first information field is used to indicate a candidate cell identity, and the second information field is used to explicitly indicate that a random access procedure corresponding to a candidate cell identified by the candidate cell identity does not include an RAR message execution process.

In an embodiment of the present disclosure, in the second indication information received by the terminal from the network device, a cell ID indicated by the first information field includes a cell ID of a candidate cell, and a bit value indicated by the second information field is a specific value used to indicate that the RAR execution process is not included, such as 1 or 0, and accordingly it can be determined that the random access procedure does not include the RAR execution process.

In a TA measurement method provided by an embodiment of the present disclosure, an indication of whether an RAR execution process is included may be performed for multiple candidate cells.

In an embodiment of the present disclosure, the indication of whether the RAR execution process is included for multiple candidate cells may be based on an indication through one second information field, or may be based on indications through multiple second information fields respectively. That is, in the embodiment of the present disclosure, the second information field in the second indication information may be a single information field or multiple information fields. When the second information field is a single information field, the single information field is used to uniformly indicate whether the random access procedures corresponding to the candidate cells identified by the multiple candidate cell identities include the RAR execution process. When the second information field is multiple information fields, each of the multiple information fields is used to separately indicate whether the random access procedure corresponding to the candidate cell identified by each candidate cell identity in the multiple candidate cell identities includes the RAR execution process. In other words, the terminal may determine whether the random access procedure initiated towards a cell corresponding to each cell ID includes the RAR execution process based on one or more RAR indication fields corresponding to the multiple cell IDs included in the second indication information.

In an embodiment of the present disclosure, the second indication information is used to trigger the terminal to initiate the random access procedure towards the candidate cell, and the second indication information may be carried in DCI in a random access procedure triggered based on a PDCCH order. Table 2 shows an example of DCI. As shown in Table 2, the DCI includes a frequency domain resource assignment information field, a random access preamble index information field, a synchronization signal/physical broadcast channel signal block index information field, and a physical random access channel mask index information field. The DCI further includes a cell ID field. The cell ID may be called a first information field, which is used to indicate a cell identity corresponding to a random access resource. The cell ID field may include one or more bits. The DCI further includes an RAR field. The RAR field may be called a second information field, which is used to indicate whether a random access procedure performed using a random access resource indicated by the DCI includes the RAR execution process. The RAR field may include one bit. When the value of the bit is 1, it indicates whether the random access procedure performed using the random access resource indicated by the DCI includes the RAR execution process, and vice versa.

**Table 1**

| DCI information field | frequency domain resource assignment | random access preamble index | uplink/supplemental uplink indication | synchronization signal block index | physical random access channel mask index | reserved bit | Cell ID | RAR |
|---|---|---|---|---|---|---|---|---|
| | All ones | 6 bits | 1 bit | 6 bits | 4 bits | X | one or more bits | 1 bit |

In an embodiment of the present disclosure, the first information field in the second indication information is used to indicate cell IDs of multiple candidate cells, or may also be used to indicate the cell IDs of multiple candidate cells, random access resources corresponding to the multiple candidate cell IDs, and synchronization signal block (Synchronization Signal and PBCH block, SSB) indexes corresponding to the multiple candidate cell IDs.

Multiple cell IDs, RO resources for the multiple cells, and SSB indexes are indicated in the second indication information. The terminal initiates random access procedures (the random access procedures do not include the RAR execution process) for measuring TA values towards multiple cells by default. Or, the second indication information further includes an RAR field used to indicate whether an RAR reception procedure needs to be performed for a random access procedure initiated towards each cell. Or, the second indication information includes RAR indication fields corresponding to multiple cells, and the RAR indication fields are used to respectively indicate whether the RAR reception procedure needs to be performed for the random access procedures initiated towards the cells.

Multiple cell IDs are indicated in the second indication information, and random access resources corresponding to multiple candidate cell IDs and SSB indexes corresponding to multiple candidate cell IDs are not indicated. The beam or RO resource for random access initiated by the terminal to each cell is selected by the user. It is determined by the terminal by default that the random access procedures initiated towards multiple cells for measuring TA values do not include the RAR execution process. Alternatively, the RAR indication fields corresponding to multiple cells are also included in the second indication information to indicate whether the RAR reception procedure needs to be performed for the random access procedures initiated towards the cells.

When the first information field is used only to indicate cell IDs of multiple candidate cells, the terminal itself may select random access resource(s) used when initiating random access procedures towards respective candidate cells. In this case, the terminal may initiate, by default, random access procedure(s) not including the RAR execution process towards one or more candidate cells, and the RA is used for the TA measurement. Alternatively, the second indication field in the second indication information may be used to indicate whether the random access procedure initiated by the terminal towards each candidate cell includes the RAR execution process.

When the first information field is used to indicate the cell IDs of multiple candidate cells, the random access resources corresponding to the cell IDs of the multiple candidate cells and the SSB indexes corresponding to the cell IDs of the multiple candidate cells, the terminal may initiate random access procedures towards the candidate cells on the corresponding random access resources according to the indication in the second indication information. In this case, the terminal may initiate, by default, random access procedure(s) not including the RAR execution process towards one or more candidate cells, and the RA is used for the TA measurement. Alternatively, the second indication field in the second indication information may be used to indicate whether the random access procedure initiated by the terminal towards each candidate cell includes the RAR execution process.

In an embodiment of the present disclosure, in a solution in which a terminal and a network device perform a random access procedure not including an RAR execution process to perform a TA measurement of a candidate cell, the network device configures a random access resource for the terminal, and the random access resource at least includes a random access resource for the candidate cell. That is, the network device configures the terminal with a random access resource for the candidate cell for performing the random access procedure not including the RAR execution process.

In an embodiment of the present disclosure, the network device may configure the random access resource for the candidate cell to the terminal based on Radio Resource Control (RRC) signaling.

In an implementation provided by an embodiment of the present disclosure, the terminal may determine whether the random access procedure includes the RAR execution process based on the random access resource for the candidate cell configured by the network device for the terminal.

In an implementation, the terminal determines to initiate, towards the candidate cell, the random access procedure not including the RAR execution process based on indication information sent by the network device for configuring the random access resource for the candidate cell. For the convenience of description, the indication information used to configure the random access resource for the candidate cell in the embodiment of the present disclosure is referred to as third indication information. The third indication information is used to configure the random access resource for the candidate cell. The random access resource for the candidate cell configured by the third indication information are used to implicitly indicate the terminal to perform the random access procedure not including the RAR execution process. That is, the random access procedure for the TA measurement for the candidate cell performed by the terminal does not include the RAR execution process by default.

FIG. 7 is a flowchart of a method of determining to initiate, towards a candidate cell, a random access procedure not including an RAR execution process according to an example embodiment. As shown in FIG. 7, the method includes the following step.

In step S51, third indication information sent by a network device is received. The third indication information is used to configure a random access resource for a candidate cell. The random access resource for the candidate cell configured by the third indication information is used to implicitly indicate the terminal to perform the random access procedure not including the RAR execution process.

In the embodiment of the present disclosure, random access resource(s) for the candidate cell configured by the network device for the terminal based on the third indication information is used for the terminal to select an appropriate random access resource to perform the random access procedure not including the RAR execution process, so as to implement the TA measurement for the candidate cell.

In an embodiment of the present disclosure, the third indication information sent by the network device to the terminal may be information for configuring random access resource(s) for the candidate cell, for example, the third indication information may be RRC signaling.

In an implementation, the terminal selecting a random access resource based on the third indication information to initiate a random access procedure towards the candidate cell and determining that the random access procedure initiated towards the candidate cell does not include the RAR execution process may be understood as: the terminal determining to initiate the random access procedure not including the RAR execution process towards the candidate cell based on a default rule. The default rule may be that: the random access procedure initiated by the terminal towards the candidate cell is determined by default as the random access procedure not including the RAR execution process. The terminal may obtain information about the candidate cell in a variety of known ways, which are not limited here.

In another implementation, since the network device needs to configure random access resource(s) for the terminal through RRC signaling, the network device may configure non-contention based random access resource(s) for each candidate cell when performing resource configuration. When the random access procedure is initiated through the non-contention based random access resource(s), only the TA measurement is performed, and the RAR execution process is not included. In this case, when the random access resource used by the terminal to initiate the random access procedure is the above-mentioned non-contention based random access resource, that is, the resource corresponds to not including the RAR execution process, it is determined that the random access procedure initiated by the terminal towards the candidate cell is the random access procedure not including the RAR execution process.

In the TA measurement method provided by the embodiment of the present disclosure, when the network device configures the random access resource(s) for the candidate cell for the terminal through the third signaling, the network device may further explicitly indicate whether the random access resource(s) for the candidate cell configured by the third signaling is(are) used to perform the random access procedure not including the RAR execution process. Hereinafter, information that explicitly indicates the random access resource(s) for the candidate cell configured by the third indication information for performing a random access procedure (whether or not including the RAR execution process) is referred to as fourth indication information.

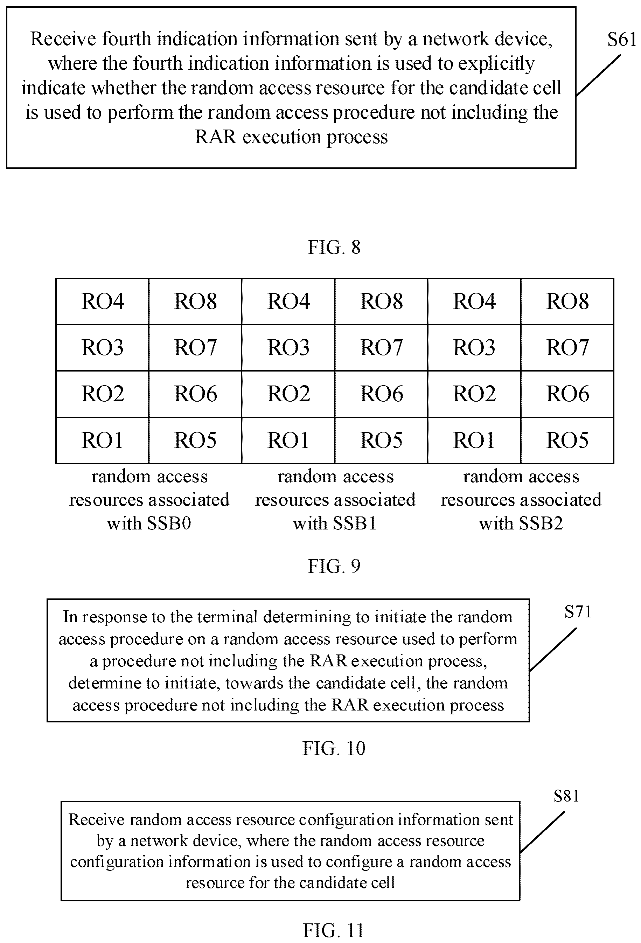

FIG. 8 is a flowchart of a method of determining to initiate, towards a candidate cell, a random access procedure not including an RAR execution process according to an example embodiment. As shown in FIG. 8, the method includes the following step.

In step S61, fourth indication information sent by a network device is received. The fourth indication information is used to explicitly indicate whether random access resource(s) for a candidate cell is(are) used to perform the random access procedure not including the RAR execution process.

The fourth indication information in the embodiment of the present disclosure may be carried in RRC signaling, and the RRC signaling may be used to configure the random access resource(s) for the candidate cell. When the random access resource(s) for the candidate cell is(are) configured through the RRC signaling, an RAR identifier may be introduced in the RRC signaling to indicate whether the random access procedure initiated using the random access resource(s) configured through the RRC signaling includes the RAR execution process.

In the above embodiments of the present disclosure, the terminal determines whether the random access procedure initiated towards the candidate cell includes the RAR execution process based on the indication information from the network device.

In another method provided by an embodiment of the present disclosure, determination of initiating a random access procedure not including an RAR execution process towards a candidate cell may be made based on the terminal itself.

In an embodiment of the present disclosure, random access resources configured for the terminal are divided into two parts, one of which is random access resource(s) used to perform the procedure not including the RAR execution process, and the other of which is random access resource(s) used to perform a procedure including the RAR execution process.

FIG. 9 is a schematic diagram of random access resources configured by a network device for a terminal according to an example embodiment. As shown in FIG. 9, RO1-RO8 are random access resources configured by the network device for the terminal, every two columns of RO resources correspond to an SSB, and SSB0, SSB1 and SSB2 are included. RO1-RO4 may be used as random access resources for performing the procedure not including the RAR execution process, and RO5-RO8 may be used as random access resources for perform the procedure including the RAR execution process.

FIG. 10 is a flowchart of a method of determining to initiate, towards a candidate cell, a random access procedure not including an RAR execution process according to an example embodiment. As shown in FIG. 10, the method includes the following step.

In step S71, in response to a terminal determining to initiate a random access procedure on a random access resource used to perform a procedure not including an RAR execution process, it is determined to initiate the random access procedure not including the RAR execution process towards a candidate cell.

In the TA measurement method provided by the embodiment of the present disclosure, the terminal and the network device may determine whether the random access procedure initiated towards the candidate cell includes the RAR execution process based on the random access resource(s) used.

In an embodiment of the present disclosure, in a case that the terminal initiates a random access procedure on a random access resource used to perform a procedure not including an RAR execution process, the terminal and the network device may determine by default to initiate a random access procedure not including the RAR execution process towards a candidate cell.

Continuing with the above example, when the terminal initiates the random access procedure on the random access resource used to perform the procedure not including the RAR execution process, for example, the terminal selects a resource RO2 to send a preamble to a candidate cell, the terminal and the network device may determine by default to initiate the random access procedure not including the RAR execution process towards the candidate cell.

In an implementation, the terminal may send indication information to the network device to indicate whether the random access resource used by the terminal is a random access resource for performing a procedure not including the RAR execution process or a random access resource for performing a procedure including the RAR execution process.

For example, when the terminal initiates a random access procedure on a random access resource used to perform the procedure not including the RAR execution process, the terminal may send fifth indication information to the network device, and the fifth indication information is used to indicate that: in the random access procedure in which the terminal uses the resource RO2 to send the preamble to the candidate cell, the RAR execution process is not included, and thus the network device does not need to send an RAR message to the terminal. When the terminal initiates a random access resource on a random access resource used to perform a procedure that includes the RAR execution process, for example, the terminal selects a resource RO5 to send the preamble to the candidate cell, the terminal may send sixth indication information to the network device, and the sixth indication information is used to indicate that: in the random access procedure in which the terminal uses the resource RO5 to send the preamble to the candidate cell, the RAR execution process is included, and thus the network device needs to send an RAR message to the terminal.

In an embodiment of the present disclosure, in a solution in which a terminal and a network device perform a random access procedure not including an RAR execution process to perform a TA measurement of a candidate cell, the network device configures random access resource(s) for the terminal, and the random access resource(s) at least includes(include) a random access resource for the candidate cell. That is, the network device configures the random access resource for the candidate cell for the terminal to perform a random access procedure not including the RAR execution process.

The network device may configure the random access resource for the candidate cell based on RRC signaling.

FIG. 11 is a flowchart of a TA measurement method according to an example embodiment. As shown in FIG. 11, the method includes the following step.

In step S81, random access resource configuration information sent by a network device is received. The random access resource configuration information is used to configure a random access resource for a candidate cell.

In the embodiment of the present disclosure, the terminal may perform a random access procedure not including an RAR execution process based on the random access resource for the candidate cell.

It can be understood that the solution for configuring the random access resource for the candidate cell based on the random access resource configuration information sent by the network device involved in the embodiment of the present disclosure is applicable to the TA measurement method involved in the above-mentioned embodiments. For example, in an embodiment of the present disclosure, the terminal may determine the configured random access resource for the candidate cell based on RRC signaling, and determine whether to perform the random access procedure not including the RAR execution process based on DCI signaling (the first indication information or the second indication information). For another example, the third indication information and the fourth indication information in the embodiments of the present disclosure may be random access resource configuration information for configuring the random access resource for the candidate cell, such as RRC signaling. That is, the terminal determines whether to perform the random access procedure not including the RAR execution process based on the RRC signaling (the third indication information and the fourth indication information).

By adopting the technical solutions of the embodiments of the present disclosure, through the random access procedure triggered by the network device and the random access procedure triggered by the terminal itself, the random access procedure is respectively determined to be a random access procedure which is only used for the TA measurement and does not include the RAR execution process. Therefore, when the TA measurement is performed based on the random access procedure between the terminal and the candidate cell, the time overhead of the TA measurement can be reduced and the user experience is improved.

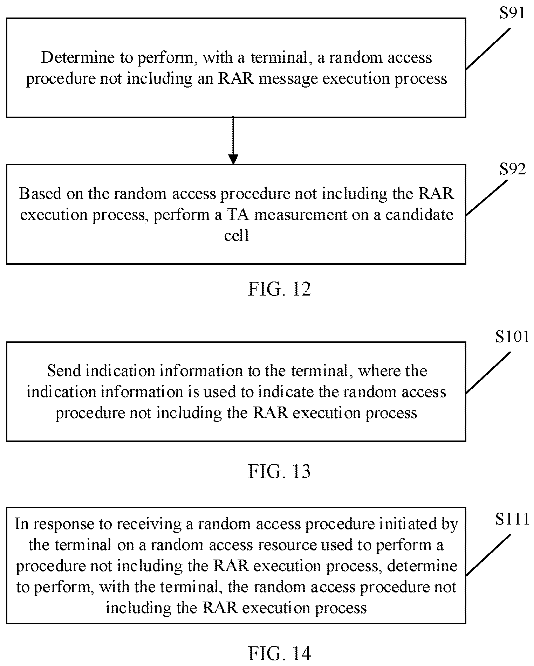

FIG. 12 is a flowchart of a TA measurement method according to an example embodiment. As shown in FIG. 12, the TA measurement is performed by a network device and includes the following steps.

In step S91, it is determined to perform, with a terminal, a random access procedure not including an RAR message execution process.

In step S92, a TA measurement is performed on a candidate cell based on the random access procedure not including the RAR execution process.

In an implementation, determining to perform, with the terminal, the random access procedure not including the RAR execution process includes: sending indication information to the terminal, and the indication information is used to indicate the random access procedure not including the RAR execution process.

FIG. 13 is a flowchart of a method of determining to perform, with a terminal, a random access procedure not including an RAR execution process according to an example embodiment. As shown in FIG. 13, the method includes the following step.

In step S101, indication information is sent to the terminal. The indication information is used to indicate the random access procedure not including the RAR execution process.

In an implementation, the indication information includes first indication information. The first indication information is used to indicate a candidate cell identity, and the candidate cell identity is used to implicitly indicate that a random access procedure corresponding to a candidate cell identified by the candidate cell identity does not include the RAR execution process.

In an implementation, the indication information includes second indication information. The second indication information includes a first information field and a second information field. The first information field is used to indicate a candidate cell identity, and the second information field is used to explicitly indicate that a random access procedure corresponding to a candidate cell identified by the candidate cell identity does not include the RAR execution process.

In an embodiment, the first information field is used to indicate multiple candidate cell identities, or the first information field is used to indicate multiple candidate cell identities, random access resources corresponding to the multiple candidate cell identities, and synchronization signal block (SSB) indexes corresponding to the multiple candidate cell identities. The second information field is a single information field or multiple information fields. The single information field is used to uniformly indicate whether random access procedures corresponding to candidate cells identified by the multiple candidate cell identities include the RAR execution process. Each of the multiple information fields is used to separately indicate whether a random access procedure corresponding to a candidate cell identified by each candidate cell identity in the multiple candidate cell identities includes the RAR execution process.

In an implementation, the indication information includes third indication information. The third indication information is used to configure a random access resource for the candidate cell, and the random access resource for the candidate cell configured by the third indication information is used to implicitly indicate the terminal to perform the random access procedure not including the RAR execution process.

In an implementation, the indication information further includes fourth indication information. The fourth indication information is used to explicitly indicate that the random access resource for the candidate cell configured by the third indication information is used to perform the random access procedure not including the RAR execution process.

FIG. 14 is a flowchart of a method of determining to perform, with a terminal, a random access procedure not including an RAR execution process according to an example embodiment. As shown in FIG. 14, the method includes the following step.

In step S111, in response to receiving a random access procedure initiated by the terminal on a random access resource used for performing a procedure not including the RAR execution process, it is determined to perform, with the terminal, the random access procedure not including the RAR execution process.

Receiving the random access procedure initiated by the terminal on the random access resource used for performing the procedure not including the RAR execution process may be understood as: receiving a random access preamble sent by the terminal on the random access resource used for performing the procedure not including the RAR execution process.

In an implementation, in an embodiment of the present disclosure, the network device sends random access resource configuration information. The random access resource configuration information is used to configure random access resource for the candidate cell.

By adopting the technical solutions of the embodiments of the present disclosure, through the random access procedure triggered by the network device and the random access procedure triggered by the terminal itself, the random access procedure is respectively determined to be a random access procedure which is used for the TA measurement and does not include the process of sending an RAR. Therefore, when TA measurement is performed based on the random access procedure between the terminal and the candidate cell, the time overhead of the TA measurement can be reduced and the user experience is improved.

It can be understood that the technical implementations involved in the procedure of the network device performing the TA measurement in the embodiments of the present disclosure can be applicable to the procedure of the terminal performing the TA measurement in the embodiments of the present disclosure. Therefore, for some technical implementations of the procedure of the network device performing the TA measurement that are not described in detail, reference may be made to the relevant description of the implementations of the terminal performing the TA measurement, and repeated descriptions will be omitted here.

It can be understood that the TA measurement method provided in the embodiments of the present disclosure is applicable to a procedure of implementing the TA measurement through interaction(s) between the terminal and the network device. For the procedure of implementing the TA measurement through interaction(s) between the terminal and the network device, the terminal and the network device each have the relevant functions involved in the above examples. Descriptions are provided below in conjunction with examples. For any part that is not detailed enough, reference may be made to the description of the relevant embodiments, and repeated descriptions about the embodiments of the present disclosure will be omitted here.

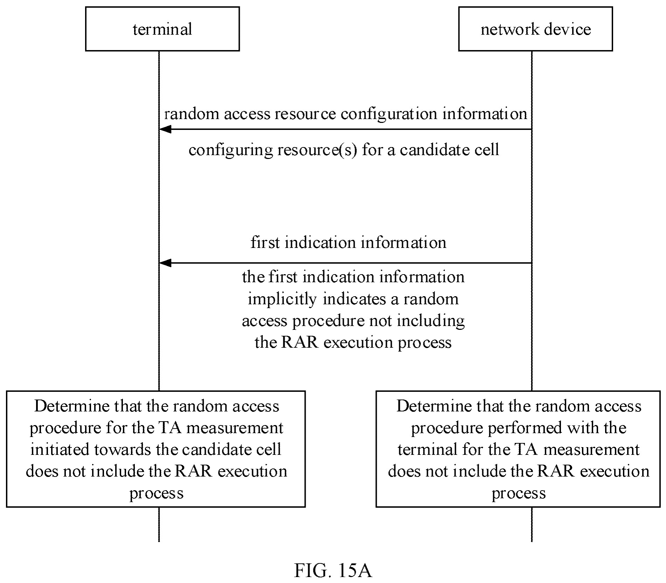

FIG. 15A is a schematic diagram of a procedure of implementing a TA measurement through interaction(s) between a terminal and a network device according to an example embodiment of the present disclosure.

Referring to FIG. 15A, the network device sends random access resource configuration information to the terminal. The random access resource configuration information is used to configure resource(s) for a candidate cell.

In an implementation, the network device sends first indication information to the terminal. The first indication information implicitly indicates a random access procedure not including an RAR execution process. The first indication information is used to indicate a candidate cell identity. The network device determines that the random access procedure for the TA measurement performed with the terminal does not include the RAR execution process. The terminal receives the first indication information sent by the network device, and determines by default that a random access procedure for the TA measurement initiated towards the candidate cell does not include the RAR execution process.

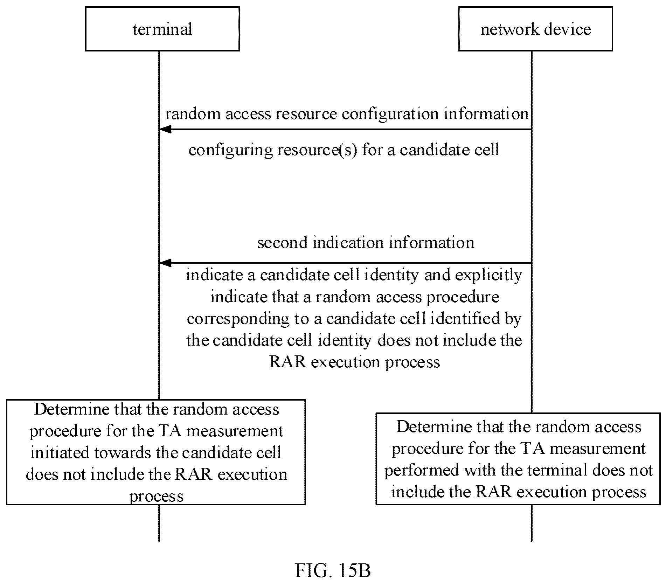

FIG. 15B is a schematic diagram of a procedure of implementing a TA measurement through interaction(s) between a terminal and a network device according to an example embodiment of the present disclosure.

Referring to FIG. 15B, the network device sends random access resource configuration information to the terminal. The random access resource configuration information is used to configure resource(s) for a candidate cell.

In another implementation, the network device sends second indication information to the terminal, and explicitly indicates a random access procedure not including an RAR execution process through the second indication information. The second indication information includes a first information field and a second information field. The first information field is used to indicate a candidate cell identity, and the second information field is used to explicitly indicate that a random access procedure corresponding to a candidate cell identified by the candidate cell identity does not include the RAR message execution process. The network device determines that the random access procedure for the TA measurement performed with the terminal does not include the RAR execution process. The terminal receives the second indication information sent by the network device, and determines that the random access procedure for the TA measurement initiated towards the candidate cell does not include the RAR execution process.

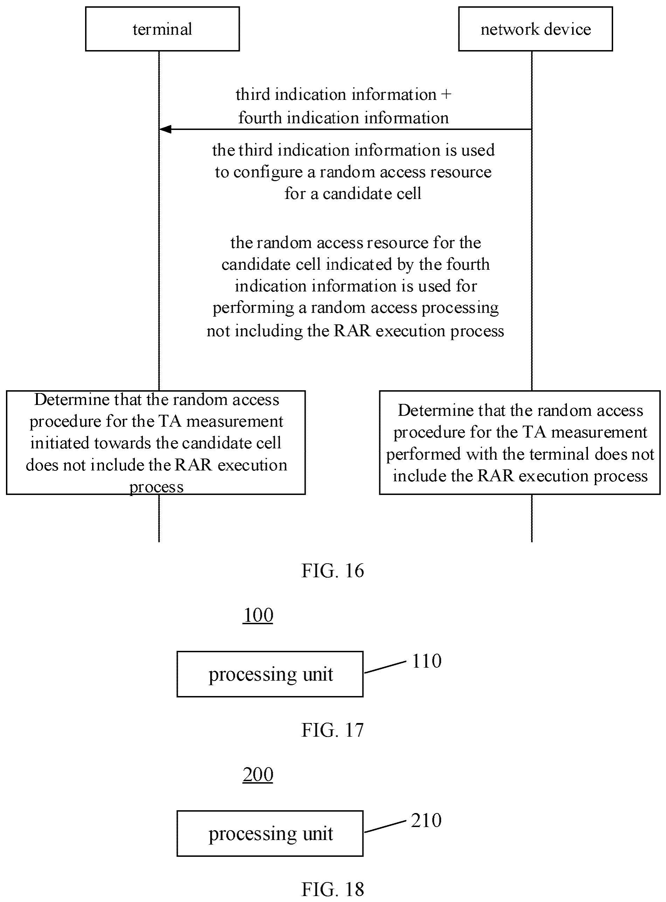

FIG. 16 is a schematic diagram of a procedure of implementing a TA measurement through interaction(s) between a terminal and a network device according to an example embodiment of the present disclosure.

Referring to FIG. 16, the network device sends third indication information to the terminal. The third indication information is used to configure random access resource(s) for a candidate cell. The random access resource(s) for the candidate cell configured by the third indication information is(are) used to implicitly indicate the terminal to perform a random access procedure not including an RAR execution process. The network device determines that the random access procedure for the TA measurement performed with the terminal does not include the RAR execution process. The terminal receives the third indication information sent by the network device, and the terminal selects a random access resource based on the third indication information to initiate a random access procedure towards the candidate cell, and determines that the random access procedure initiated towards the candidate cell does not include the RAR execution process.

The third indication information may be random access resource configuration information used for performing random access resource configuration. The random access resource configuration information may be RRC signaling.

In an embodiment of the present disclosure, fourth indication information may be further introduced into the random access resource configuration information sent by the network device to the terminal. The fourth indication information explicitly indicates whether the random access resource(s) for the candidate cell is(are) used to perform the random access procedure not including the RAR execution process.

In an embodiment of the present disclosure, the terminal receives the fourth indication information sent by the network device, and in a case that the terminal determines that the random access resource(s) for the candidate cell indicated by the fourth indication information is(are) used to perform the random access procedure not including the RAR execution process, the terminal determines that the random access procedure initiated towards the candidate cell does not include the RAR execution process.

The fourth indication information shown in FIG. 16 is an optional step and may be included or not.

It is understandable that FIG. 15A, FIG. 15B and FIG. 16 are only schematic diagrams of example procedures of a terminal interacting with a network device to implement the TA measurement. The actual implementation is not limited to the above-mentioned examples. For example, in the embodiments of the present disclosure, a schematic diagram of a terminal itself determining to perform a random access procedure not including an RAR execution process may be provided.

In a case that the terminal interacts with the network device to implement the TA measurement in an embodiment of the present disclosure, the terminal itself may determine to perform a random access procedure not including an RAR execution process. The terminal determines to initiate the random access procedure on a random access resource used to perform a procedure not including the RAR execution process, and determines to initiate the random access procedure not including the RAR execution process towards a candidate cell. The network device receives the random access procedure initiated by the terminal on the random access resource used to perform the procedure not including the RAR execution process, and determines to perform, with the terminal, the random access procedure not including the RAR execution process.

It can be understood that the random access procedure not including the RAR execution process involved in the above embodiments of the present disclosure may be as follows: a random access preamble sequence is sent, but the network device does not send an RAR message, and the terminal does not receive the RAR message. The network device receives the random access procedure initiated by the terminal and performs the TA measurement on the candidate cell.

It should be noted that those skilled in the art can understand that various implementations/embodiments involved in the embodiments of the present disclosure can be used in conjunction with the aforementioned embodiments or can be used independently. The implementation principle is similar regardless of whether the implementations are used independently or in conjunction with the aforementioned embodiments. In the implementations of the present disclosure, a part of embodiments are described with examples in which the implementations are used in combination. Of course, those skilled in the art can understand that such examples are not limitations of the embodiments of the present disclosure.

Based on the same concept, an embodiment of the present disclosure further provides a TA measurement apparatus.

It is understandable that the TA measurement apparatus provided in the embodiment of the present disclosure includes hardware structure(s) and/or software module(s) corresponding to the execution of each function in order to realize the above functions. In combination with the units and algorithm steps of each example disclosed in the embodiments of the present disclosure, the embodiments of the present disclosure can be implemented in the form of hardware or a combination of hardware and computer software. Whether a function is implemented in the form of hardware or computer software driving hardware depends on the specific application and design constraints of the technical solutions. Those skilled in the art can use different methods to implement the described functions for each specific application, but such implementation should not be considered to exceed the scope of the technical solutions of the embodiments of the present disclosure.

FIG. 17 is a block diagram of a TA measurement apparatus according to an example embodiment. Referring to FIG. 17, the apparatus 100 includes a processing unit 110.

The processing unit 110 is configured to determine to initiate, towards a candidate cell, a random access procedure not including an RAR execution process. The random access procedure not including the RAR execution process is used to perform a TA measurement on a candidate cell.

In an implementation, the processing unit 110 determines to initiate, towards the candidate cell, the random access procedure not including the RAR execution process in the following manner, including: receiving indication information sent by a network device, where the indication information is used to indicate the random access procedure not including the RAR execution process.

In an implementation, the indication information includes first indication information. The first indication information is used to indicate a candidate cell identity, and the candidate cell identity is used to implicitly indicate that a random access procedure corresponding to a candidate cell identified by the candidate cell identity does not include the RAR execution process.

In an implementation, the indication information includes second indication information, and the second indication information includes a first information field and a second information field.

The first information field is used to indicate a candidate cell identity, and the second information field is used to explicitly indicate that a random access procedure corresponding to a candidate cell identified by the candidate cell identity does not include the RAR message execution process.

In an implementation, the first information field is used to indicate multiple candidate cell identities, or the first information field is used to indicate multiple candidate cell identities, random access resources corresponding to the multiple candidate cell identities, and synchronization signal block (SSB) indexes corresponding to the multiple candidate cell identities. The second information field is a single information field or multiple information fields.

The single information field is used to uniformly indicate whether random access procedures corresponding to candidate cells identified by the multiple candidate cell identities include the RAR message execution process. Each of the multiple information fields is used to respectively indicate whether a random access procedure corresponding to a candidate cell identified by each candidate cell identity in the multiple candidate cell identities includes the RAR execution process.

In an implementation, the indication information includes third indication information. The third indication information is used to configure a random access resource for the candidate cell, and the random access resource for the candidate cell configured by the third indication information is used to implicitly indicate the terminal to perform the random access procedure not including the RAR execution process.

In an implementation, the indication information further includes fourth indication information. The fourth indication information is used to explicitly indicate that the random access resource for the candidate cell configured by the third indication information is used to perform the random access procedure not including the RAR execution process.

In an implementation, the processing unit 110 determines to initiate, towards the candidate cell, the random access procedure not including the RAR execution process in the following manner:

in response to the terminal determining to initiate the random access procedure on a random access resource used to perform a procedure not including the RAR execution process, determining to initiate the random access procedure not including the RAR execution process towards a candidate cell.

In an implementation, the processing unit 110 is further configured to receive random access resource configuration information sent by a network device, where the random access resource configuration information is used to configure a random access resource for a candidate cell.

By adopting the technical solutions of the embodiment of the present disclosure, the random access procedure is initiated by the terminal towards the candidate cell for performing the TA measurement on the candidate cell, and the random access procedure is set as not including the RAR execution process. The technical solutions can simplify the process of the TA measurement based on RA, reduce the time overhead of the TA measurement, avoid a situation in which the TA measurement brings a relatively large influence on a data transmission between a user and a current serving cell, and improve the user experience.

FIG. 18 is a block diagram of a TA measurement apparatus according to an example embodiment. Referring to FIG. 18, the apparatus 200 includes a processing unit 210.

The processing unit 210 is configured to determine to perform, with a terminal, a random access procedure not including a Random Access Response (RAR) message execution process; and based on the random access procedure not including the RAR execution process, perform a TA measurement on a candidate cell.

In an implementation, the processing unit 210 determines to perform, with the terminal, the random access procedure not including the Random Access Response (RAR) execution process in the following manner: sending indication information to the terminal, where the indication information is used to indicate the random access procedure not including the RAR execution process.

In an implementation, the indication information includes first indication information. The first indication information is used to indicate a candidate cell identity, and the candidate cell identity is used to implicitly indicate that a random access procedure corresponding to a candidate cell identified by the candidate cell identity does not include the RAR execution process.

In an implementation, the indication information includes second indication information, and the second indication information includes a first information field and a second information field. The first information field is used to indicate a candidate cell identity, and the second information field is used to explicitly indicate that a random access procedure corresponding to a candidate cell identified by the candidate cell identity does not include the RAR execution process.

In an implementation, the first information field is used to indicate multiple candidate cell identities, or the first information field is used to indicate multiple candidate cell identities, random access resources corresponding to multiple candidate cell identities, and synchronization signal block (SSB) indexes corresponding to the multiple candidate cell identities. The second information field is a single information field or multiple information fields.

The single information field is used to uniformly indicate whether random access procedures corresponding to candidate cells identified by the multiple candidate cell identities include the RAR execution process. Each of the multiple information fields is used to respectively indicate whether a random access procedure corresponding to a candidate cell identified by each candidate cell identity in the multiple candidate cell identities includes the RAR execution process.

In an implementation, the indication information includes third indication information, the third indication information is used to configure a random access resource for the candidate cell, and the random access resource for the candidate cell configured by the third indication information is used to implicitly indicate the terminal to perform the random access procedure not including the RAR execution process.

In an implementation, the indication information further includes fourth indication information, and the fourth indication information is used to explicitly indicate that the random access resource for the candidate cell configured by the third indication information is used to perform the random access procedure not including include the RAR execution process.

In an implementation, the processing unit 210 determines to perform, with the terminal, the random access procedure excluding the RAR execution process in the following manner: in response to receiving the random access procedure initiated by the terminal on a random access resource used to perform a procedure not including the RAR execution process, determining to perform, with the terminal, the random access procedure not including the RAR execution process.

The processing unit 210 is further configured to send random access resource configuration information, where the random access resource configuration information is used to configure a random access resource for the candidate cell.

By adopting the technical solutions of the embodiments of the present disclosure, the random access procedure is initiated by the terminal towards the candidate cell for performing the TA measurement on the candidate cell, and the random access procedure is set to be not including the process of sending the RAR message. The technical solutions can simplify the process of RA-based TA measurement, reduce the time overhead of the TA measurement, avoid a situation in which the TA measurement brings a relatively large influence on a data transmission between a user and a current serving cell, and improve user experience.

Regarding the apparatuses in the above embodiments, the specific manner in which each module performs operations has been described in detail in the embodiments of the methods, and repeated descriptions will be omitted here.

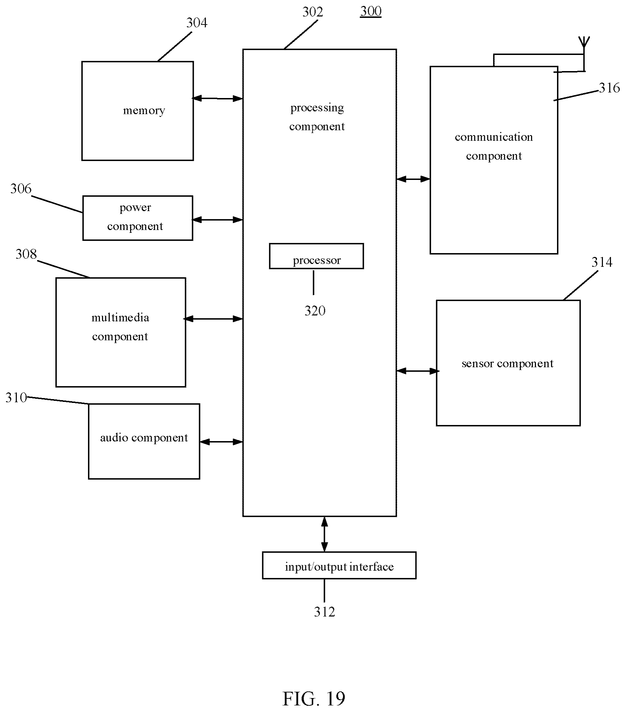

FIG. 19 is a block diagram of an apparatus 300 for measuring a TA according to an example embodiment. The apparatus 300 may be provided as a terminal. For example, the apparatus 300 may be a mobile phone, a computer, a digital broadcast terminal, a messaging device, a gaming console, a tablet, a medical device, exercise equipment, a personal digital assistant, and the like.

Referring to FIG. 19, the apparatus 300 may include one or more of the following components: a processing component 302, a memory 304, a power component 306, a multimedia component 308, an audio component 310, an input/output (I/O) interface 312, a sensor component 314, and a communication component 316.

The processing component 302 typically controls overall operations of the apparatus 300, such as the operations associated with display, telephone calls, data communications, camera operations, and recording operations. The processing component 302 may include one or more processors 320 to execute instructions to perform all or part of the steps in the above described methods. Moreover, the processing component 302 may include one or more modules which facilitate the interaction between the processing component 302 and other components. For instance, the processing component 302 may include a multimedia module to facilitate the interaction between the multimedia component 308 and the processing component 302.

The memory 304 is configured to store various types of data to support the operation of the apparatus 300. Examples of such data include instructions for any applications or methods operated on the apparatus 300, contact data, phonebook data, messages, pictures, video, etc. The memory 304 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 306 provides power to various components of the apparatus 300. The power component 306 may include a power management system, one or more power sources, and any other components associated with the generation, management, and distribution of power in the apparatus 300.

The multimedia component 308 includes a screen providing an output interface between the apparatus 300 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 308 includes a front camera and/or a rear camera. The front camera and the rear camera may receive an external multimedia datum while the apparatus 300 is in an operation mode, such as a photographing mode or a video mode. Each of the front camera and the rear camera may be a fixed optical lens system or have focus and optical zoom capability.

The audio component 310 is configured to output and/or input audio signals. For example, the audio component 310 includes a microphone ("MIC") configured to receive an external audio signal when the apparatus 300 is in an operation mode, such as a call mode, a recording mode, and a voice recognition mode. The received audio signal may be further stored in the memory 304 or transmitted via the communication component 316. In some embodiments, the audio component 310 further includes a speaker to output audio signals.

The I/O interface 312 provides an interface between the processing component 302 and peripheral interface modules, such as a keyboard, a click wheel, buttons, and the like. The buttons may include, but are not limited to, a home button, a volume button, a starting button, and a locking button.

The sensor component 314 includes one or more sensors to provide status assessments of various aspects of the apparatus 300. For instance, the sensor component 314 may detect an open/closed status of the apparatus 300, relative positioning of components, e.g., the display and the keypad, of the apparatus 300, a change in position of the apparatus 300 or a component of the apparatus 300, a presence or absence of user contact with the apparatus 300, an orientation or an acceleration/deceleration of the apparatus 300, and a change in temperature of the apparatus 300. The sensor component 314 may include a proximity sensor configured to detect the presence of nearby objects without any physical contact. The sensor component 314 may also include a light sensor, such as a CMOS or CCD image sensor, for use in imaging applications. In some embodiments, the sensor component 314 may also include an accelerometer sensor, a gyroscope sensor, a magnetic sensor, a pressure sensor, or a temperature sensor.

The communication component 316 is configured to facilitate communication, wired or wirelessly, between the apparatus 300 and other devices. The apparatus 300 can access a wireless network based on a communication standard, such as WiFi, 2G, or 3G, or a combination thereof. In one example embodiment, the communication component 316 receives a broadcast signal or broadcast associated information from an external broadcast management system via a broadcast channel. In one example embodiment, the communication component 316 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In example embodiments, the apparatus 300 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In example embodiments, there is also provided a non-transitory computer-readable storage medium including instructions, such as the memory 304 including instructions executable by the processor 320 in the apparatus 300, for performing the above-described methods. For example, the non-transitory computer-readable storage medium may be a ROM, a Random Access Memory (RAM), a CD-ROM, a magnetic tape, a floppy disc, an optical data storage device, and the like.

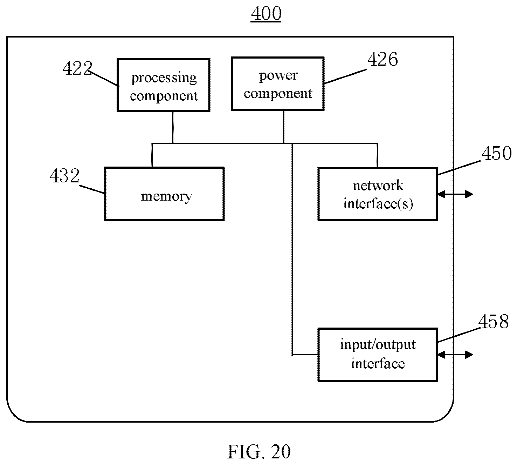

FIG. 20 is a block diagram of an apparatus 400 for measuring a Timing Advance (TA) according to an example embodiment. For example, the apparatus 400 may be provided as a network device. Referring to FIG. 20, the apparatus 400 includes a processing component 422 that further includes one or more processors, and memory resources represented by a memory 432 for storing instructions executable by the processing component 422, such as application programs. The application programs stored in the memory 432 may include one or more modules each corresponding to a set of instructions. Further, the processing component 422 is configured to execute the instructions to perform the above methods.

The apparatus 400 may also include a power component 426 configured to perform power management of the apparatus 400, wired or wireless network interface(s) 450 configured to connect the apparatus 400 to a network, and an input/output (I/O) interface 458. The apparatus 400 may operate based on an operating system stored in the memory 432, such as Windows Server^{™}, Mac OS X^{™}, Unix^{™}, Linux^{™}, FreeBSD^{™}, or the like.

In an example embodiment, a non-transitory computer-readable storage medium including instructions is also provided, such as the memory 432 including instructions. The instructions may be executed by the processing component 422 of the apparatus 400 to perform the above methods. For example, the non-transitory computer-readable storage medium may be a ROM, a Random Access Memory (RAM), a CD-ROM, a magnetic tape, a floppy disk, and an optical data storage device, etc.

It can be further understood that "plurality" in the present disclosure refers to two or more than two, and other quantifiers are similar. The expression "and/or" describes an association relationship of associated objects, indicating that three relationships may exist. For example, A and/or B may represent: A exists alone, A and B exist at the same time, and B exists alone. The character "/" generally indicates that associated objects before and after the character are in an "or" relationship. The singular forms "a/an", "said" and "the" are also intended to include plural forms, unless the context clearly indicates other meanings.

It can be further understood that the meanings of the words "in response to" and "if" involved in the present disclosure depend on the context and the actual usage scenarios. For example, the word "in response to" used herein may be interpreted as "at the time of..." or "when..." or "if".

It can be further understood that the terms "first", "second", etc. are used to describe various information, but such information should not be limited to these terms. These terms are only used to distinguish the same type of information from each other, and do not indicate a specific order or degree of importance. In fact, the expressions "first", "second", etc. can be used interchangeably. For example, without departing from the scope of the present disclosure, first information may also be referred to as second information, and similarly, second information may also be referred to as first information.

It can be further understood that although operations are described in a specific order in the drawings in the embodiments of the present disclosure, it should not be understood as requiring the operations to be performed in the specific order shown in the drawings or in a serial order, or requiring the execution of all the operations shown in the drawings to obtain a desired result. In certain environments, multitasking and parallel processing may be advantageous.

Other embodiments of the disclosure will be apparent to those skilled in the art from consideration of the specification and practice of the disclosure disclosed here. This application is intended to cover any variations, uses, or adaptations of the present disclosure following the general principles thereof and including such departures from the present disclosure as come within known or customary practice in the art.

It will be appreciated that the present disclosure is not limited to the exact construction that has been described above and illustrated in the accompanying drawings, and that various modifications and changes can be made without departing from the scope thereof. It is intended that the scope of the present disclosure only be limited by the scope of the appended claims.

## Claims

1. A Timing Advance (TA) measurement method, wherein the method is performed by a terminal, and the method comprises:
determining to initiate, towards a candidate cell, a random access procedure not comprising a Random Access Response (RAR) message execution process, wherein the random access procedure not comprising the RAR execution process is used to perform a TA measurement on the candidate cell.

2. The method according to claim 1, wherein determining to initiate, towards the candidate cell, the random access procedure not comprising the RAR execution process comprises:
receiving indication information sent by a network device, wherein the indication information is used to indicate the random access procedure not comprising the RAR execution process.

3. The method according to claim 2, wherein the indication information comprises first indication information, the first indication information is used to indicate a candidate cell identity, and the candidate cell identity is used to implicitly indicate that a random access procedure corresponding to a candidate cell identified by the candidate cell identity does not comprise the RAR execution process.

4. The method according to claim 2, wherein the indication information comprises second indication information, and the second indication information comprise a first information field and a second information field;
wherein the first information field is used to indicate a candidate cell identity, and the second information field is used to explicitly indicate that a random access procedure corresponding to a candidate cell identified by the candidate cell identity does not comprise the RAR message execution process.

5. The method according to claim 4, wherein the first information field is used to indicate multiple candidate cell identities, or the first information field is used to indicate multiple candidate cell identities, random access resources corresponding to the multiple candidate cell identities and Synchronization Signal Block (SSB) indexes corresponding to the multiple candidate cell identities;
wherein the second information field is a single information field or multiple information fields;
wherein the single information field is used to uniformly indicate whether random access procedures corresponding to candidate cells identified by the multiple candidate cell identities comprise the RAR message execution process;
wherein each of the multiple information fields is used to respectively indicate whether a random access procedure corresponding to a candidate cell identified by each candidate cell identity among the multiple candidate cell identities comprises the RAR execution process.

6. The method according to claim 2, wherein the indication information comprises third indication information, and the third indication information is used to configure a random access resource for the candidate cell, and the random access resource for the candidate cell configured by the third indication information is used to implicitly indicate the terminal to perform the random access procedure not comprising the RAR execution process.

7. The method according to claim 6, wherein the indication information further comprises fourth indication information, and the fourth indication information is used to explicitly indicate that the random access resource for the candidate cell configured by the third indication information is used to perform the random access procedure not comprising the RAR execution process.

8. The method according to claim 1, wherein determining to initiate, towards the candidate cell, the random access procedure not comprising the RAR execution process comprises:
in response to the terminal determining to initiate the random access procedure on a random access resource used to perform a procedure not comprising the RAR execution process, determining to initiate, towards the candidate cell, the random access procedure not comprising the RAR execution process.

9. The method according to any one of claims 1 to 8, further comprising:
receiving random access resource configuration information sent by a network device, wherein the random access resource configuration information is used to configure a random access resource for the candidate cell.

10. A Timing Advance (TA) measurement method, wherein the method is performed by a network device, and the method comprises:
determining to perform, with a terminal, a random access procedure not comprising a Random Access Response (RAR) message execution process; and
based on the random access procedure not comprising the RAR execution process, performing a TA measurement on a candidate cell.

11. The method according to claim 10, wherein determining to perform, with the terminal, the random access procedure not comprising the Random Access Response (RAR) execution process comprises:
sending indication information to the terminal, wherein the indication information is used to indicate the random access procedure not comprising the RAR execution process.

12. The method according to claim 11, wherein the indication information comprises first indication information, the first indication information is used to indicate a candidate cell identity, and the candidate cell identity is used to implicitly indicate that a random access procedure corresponding to a candidate cell identified by the candidate cell identity does not comprise the RAR execution process.

13. The method according to claim 11, wherein the indication information comprises second indication information, and the second indication information comprises a first information field and a second information field;
wherein the first information field is used to indicate a candidate cell identity, and the second information field is used to explicitly indicate that a random access procedure corresponding to a candidate cell identified by the candidate cell identity does not comprise the RAR execution process.

14. The method according to claim 13, wherein the first information field is used to indicate multiple candidate cell identities, or the first information field is used to indicate multiple candidate cell identities, random access resources corresponding to the multiple candidate cell identities and Synchronization Signal Block (SSB) indexes corresponding to the multiple candidate cell identities;
wherein the second information field is a single information field or multiple information fields;
wherein the single information field is used to uniformly indicate whether the random access procedures corresponding to the candidate cells identified by the multiple candidate cell identities comprise the RAR execution process;
wherein each of the multiple information fields is used to indicate whether a random access procedure corresponding to a candidate cell identified by each candidate cell identity among the multiple candidate cell identities comprises the RAR execution process.

15. The method according to claim 11, wherein the indication information comprises third indication information, and the third indication information is used to configure a random access resource for the candidate cell, and the random access resource for the candidate cell configured by the third indication information is used to implicitly indicate the terminal to perform the random access procedure not comprising the RAR execution process.

16. The method according to claim 15, wherein the indication information further comprises fourth indication information, and the fourth indication information is used to explicitly indicate that the random access resource for the candidate cell configured by the third indication information is used to perform the random access procedure not comprising the RAR execution process.

17. The method according to claim 10, wherein the determining to perform, with the terminal, the random access procedure not comprising the RAR execution process comprises:
in response to receiving a random access procedure initiated by the terminal on a random access resource used to perform a procedure not comprising the RAR execution process, determining to perform, with the terminal, the random access procedure not comprising the RAR execution process.

18. The method according to any one of claims 10 to 17, further comprising:
sending random access resource configuration information, wherein the random access resource configuration information is used to configure a random access resource for the candidate cell.

19. A Timing Advance (TA) measurement apparatus, comprising:
a processing unit configured to determine to initiate, towards a candidate cell, a random access procedure not comprising a Random Access Response (RAR) execution process, wherein the random access procedure not comprising the RAR execution process is used to perform a TA measurement on the candidate cell.

20. A Timing Advance (TA) measurement apparatus, comprising:
a processing unit configured to determine to perform, with a terminal, a random access procedure not comprising a Random Access Response (RAR) execution procedure; and perform a TA measurement on a candidate cell based on the random access procedure not comprising the RAR execution process.

21. A Timing Advance (TA) measurement apparatus, comprising:
a processor; and
a memory configured to store instructions executable by the processor;
wherein the processor is configured to perform the method according to any one of claims 1 to 9 or 10 to 18.

22. A storage medium, wherein instructions are stored in the storage medium, and when the instructions in the storage medium are executed by a processor of a terminal, the terminal is caused to perform the method according to any one of claims 1 to 9 or 10 to 18.
